Europäisches Patentamt

European Patent Office

Office européen des brevets

(19)

(11)  **EP 1 604 956 A1**

(12)  **EUROPEAN PATENT APPLICATION**

(43)  Date of publication:
      **14.12.2005 Bulletin 2005/50**

(51)  Int Cl.⁷: **C02F 11/18**, C02F 3/12,
      C02F 11/10, C02F 11/06

(21)  Application number: **04466023.1**

(22)  Date of filing: **03.09.2004**

(84)  Designated Contracting States:
      **AT BE BG CH CY CZ DE DK EE ES FI FR GB GR
      HU IE IT LI LU MC NL PL PT RO SE SI SK TR**
      Designated Extension States:
      **AL HR LT LV MK**

(30)  Priority: **04.09.2003 CZ 20032401**

(71)  Applicant: **Libor Dlouhy-Dlouhy I.T.A.
      150 00 Praha 5 (CZ)**

(72)  Inventors:
      • **Lerl, Zdenek
        140 00 Praha 5 (CZ)**
      • **Serks, Petr
        155 00 Praha 5 (CZ)**
      • **Kouba, Jan
        140 00 Praha 4 (CZ)**

(74)  Representative: **Loskotova, Jarmila
        Kartouzska 4
        150 21 Praha 5 (CZ)**

(54)  **Thermic sludge sanitation facility**

(57)  The thermic sludge sanitation facility enables a continuous process of thermic sludge sanitation with a guarantee of required retention time at the required sanitation temperature of the whole volume of treated sludge by a suitable arrangement of more retention tanks and their mutual interconnection within the whole thermic sanitation system with a recuperation heat exchanger and heating device.

Fig. 1

## Description

The field of technology

The invention applies to the thermic sanitation of sludge, particularly from sewage water.

The prior art

Disposal of the sludge from wastewaters is currently an environmental and economical issue for all countries of the world. The sludge from water treatment plants can be used as a valuable fertilizer for agricultural soil after stabilization and drainage. The economical use of sludge is conditioned by removal of pathogenic microorganisms causing various diseases; such organisms are particularly abundant in such substances.

The sludge limits and criteria applicable for agricultural soil are determined by regulations.

The process reducing the volume of pathogenic microorganisms in sludge is called sanitation.

The following is used for sanitation:

- thermic sanitation at temperature 60 - 75°C for the required time
- sludge combustion in an incinerator's combustion chamber
- chemical sanitation by creating an alkaline environment.

Today, mainly two methods of sludge sanitation from wastewaters are used: thermic charge sanitation and chemical lime sanitation.

Thermic charge sanitation is carried out by heating a charge (a certain quantity of untreated sludge) in one aerated sanitation tank with agitator at a temperature of 60 - 70°C for a certain time. From the tank, the treated sludge is pumped through recuperation sludge - a sludge heat exchanger to a decay tank where biogas is generated and used as fuel. In the sludge - sludge heat exchanger, the treated sludge is cooled down to a temperature of 35 - 40°C, which is suitable for the processes in the decay tank and at the same time, fresh untreated sludge is pre-heated for charging the heated and aerated sanitation tank with the agitator. The process is charge-based, which means the same quantity of preheated sludge equalling the amount of charged untreated sludge to the sanitation tank is drained from the sanitation tank through the sludge - sludge heat exchanger to the decay tank.

The disadvantage of this solution is that when using one common sanitation tank, an identical and required time for all sludge parts/whole sludge at temperatures guaranteeing the sanitation process cannot be guaranteed by mixing the tank contents. The volume intended for cleaning goes to the sanitation tank for a certain time and at a certain point, the same sludge volume must be drained; it may happen that part of the volume that was added earlier does not need to remain all that time at the sanitation temperature and part of the charge remains at the sanitation temperature for too long. Draining the same volume of sludge as sludge inlet is necessary for continuous sludge production by the water treatment plant. Viewed technically, this problem can be resolved by superposed storage tank, which however is not profitable for investment, spatial and operational reasons.

In case of a shorter delay time between the last charge of untreated sludge and subsequent draining of the treated sludge, it cannot be guaranteed that the whole sludge volume remains at the sanitation temperature for the time required.

Hence, this does not guarantee the clean sludge limits determined by the law for the application of sludge in agriculture.

Another disadvantage is the overall appearance of the station structure. Current sanitation stations use one common sanitation tank and structurally, it is a tall building included with difficulty in the landscape or the station building.

The nature of the invention

The above-mentioned disadvantages are removed by the thermic sludge sanitation facility, which is characterized by the continuous process of thermic sludge sanitation, where the time required for sludge to remain at the sanitation temperature is guaranteed for all the sludge through a suitable arrangement of more retention tanks and their mutual interconnection within the whole thermic sludge sanitation process in cooperation with the recuperation heat exchanger and heating device.

The equipment required for thermic sludge sanitation consists of a recuperation heat exchanger, heating device and more than two retention tanks, each with a minimum volume equalling the continuously fed sludge volume for the time required to retain it at the sanitation temperature divided by a number minus two (n-2) of the total number of retention tanks (n).

The relationship can be expressed as follows:

$$V = M.T/(n-2)$$

where:

    V - tank volume      ($m^3$)
    M - sludge flow     ($m^3/h$)
    T - required retention time at the sanitation temperature     (h)
    n - number of tanks     (-)

The facility used for thermic sludge sanitation as specified by the invention contains a heating device and recuperation heat exchanger; it also contains at least two retention tanks, where the heating device outlet is connected to the inlet of the first retention tank and can be connected to inlets of the other retention tanks and the outlets from individual retention tanks are connected to the recuperation heat exchanger.

Each tank is equipped with an agitator and air inlet.

The interconnection of the retention tanks within the whole sanitation system guarantees a time delay between the last charge of untreated sludge followed by draining the treated sludge so that the delay equals the time required for the immediate thermic sanitation process.

This ensures that limits applicable to the treated sludge quality are achieved.

Summary of figures in the drawing

Figure 1 depicts the thermic sludge sanitation facility with four retention tanks and

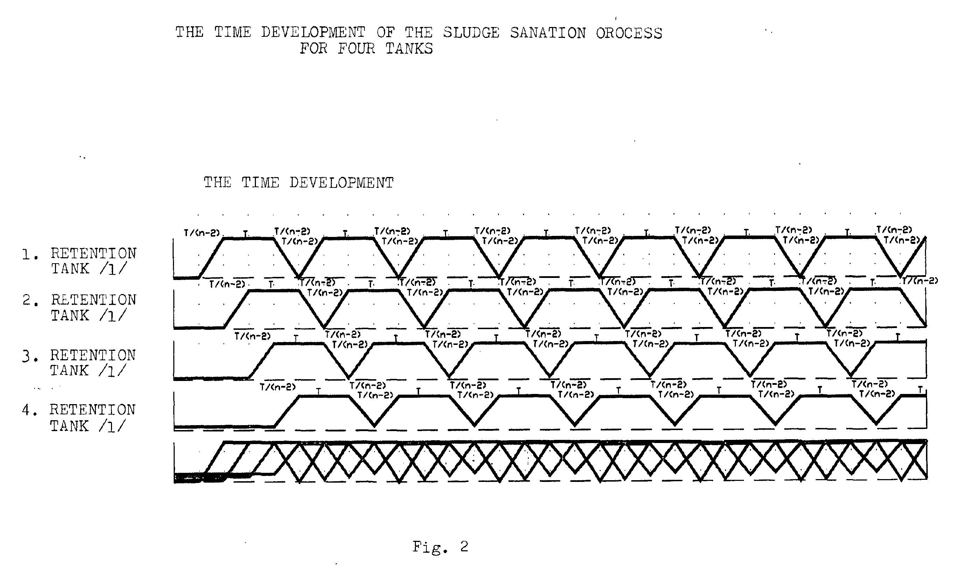

Figure 2 shows the time development of the sludge sanitation process for four tanks.

Example of the invention design

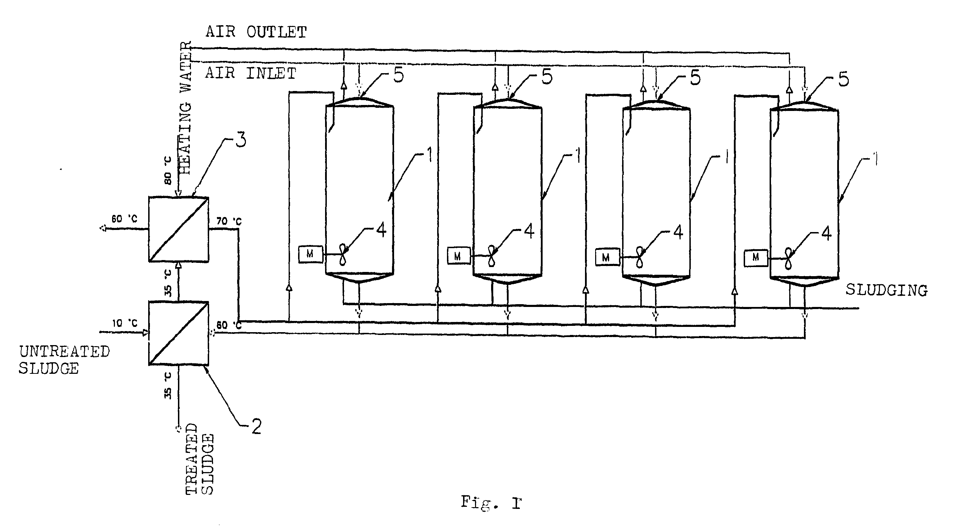

The sample facility for thermic sludge sanitation depicted in Figure 1 consists of a heating device 3, recuperation heat exchanger 2 and four retention tanks 1 equipped with an agitator 4 and air inlet 5, while the outlet of the heating device 3 is connected to the inlet of the first retention tank 1 and can be connected to any inlets of the retention tanks 1. The outlets of the retention tanks 1 are interconnected and connected to the recuperation heat exchanger 2.

Sludge to be treated is fed through the recuperation heat exchanger 2, where it is preheated to a temperature of about 35°C to the already treated drained sludge to possibly a decay tank. Preheated sludge for treatment is fed to the heating device 3 from the recuperation heat exchanger 2 where sludge is heated to 70°C and from the heating device 3 sludge is fed to the first retention tank 1 and the flow rate equals the quotient of the time required for sludge retention in the thermic environment divided by the number of tanks minus two (n-2); in case of four tanks, the time is half. After feeding to the first retention tank 1 is complete, the sludge flow is re-connected and fed to the second retention tank 1. Upon filling the second retention tank 1 the sanitation sludge flow is re-connected again to the third retention tank 1 and finally to the fourth retention tank 1 after the third tank is full. When filling the last retention tank 1, the treated sludge from the first retention tank 1 is drained to the recuperation heat exchanger 2 followed by consecutive draining of already treated sludge from the other tanks with successive feeding, retaining and draining of the treated sludge in the tanks. This method ensures sludge retention time at the required sanitation temperature. All the retention tanks are equipped with compressed air inlets 5 and agitators 4 to avoid the decay process during the sanitation process.

Industrial applicability

The sludge sanitation facility as specified in the invention can be used at all water treatment plants of communal water, wastewaters from operational processes in the food, chemicals and biology industry followed by the use of sludge in agriculture and landscaping. This facility is not suitable for dangerous wastewaters from which toxic chemical substances cannot be removed using standard biological or chemical cleaning processes and where special procedures are required.

**Claims**

1. The thermic sludge sanitation facility consisting of a heating device and recuperation heat exchanger is further **characterized by** having at least two retention tanks /1/ while the outlet from the heating device /3/ is connected to the inlet of the first retention tank /1/ and can be re-connected to inlets of the other retention tanks /1/, and the outlets from the retention tanks /1/ are connected to the recuperation heat exchanger /2/.

2. The thermic sludge sanitation facility according to claim 1 is **characterized by** the fact that all retention tanks /1/ are equipped with an agitator /4/ and air inlet /5/.

3. The thermic sludge sanitation facility is **characterized by** the fact that it is designed for continuous sludge flow through the sanitation device, whereas for all sludge particles the sludge retention time (T) is guaranteed at the required sanitation temperature.

4. The thermic sludge sanitation facility according to claim 1, 2 and 3 is **characterized by** the fact that the retention tanks /1/ are of a volume equalling the continuously fed sludge quantity through the retaining time at the sanitation temperature (T) divided by the number of retention tanks minus two (n-2).

AIR OUTLET

AIR INLET

HEATING WATER

80 °C

60 °C

70 °C

35 °C

10 °C

60 °C

35 °C

UNTREATED
SLUDGE

TREATED
SLUDGE

SLUDGING

3

2

5   5   5   5

1   1   1   1

4   4   4   4

M   M   M   M

Fig. 1

EP 1 604 956 A1

THE TIME DEVELOPMENT OF THE SLUDGE SANATION OROCESS
FOR FOUR TANKS

THE TIME DEVELOPMENT

1. RETENTION
   TANK /1/

2. RETENTION
   TANK /1/

3. RETENTION
   TANK /1/

4. RETENTION
   TANK /1/

Fig. 2

EP 1 604 956 A1

**European Patent Office**

## EUROPEAN SEARCH REPORT

Application Number

EP 04 46 6023

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2002/168288 A1 (BRADE COLIN EDWARD) 14 November 2002 (2002-11-14) | 1-3 | C02F11/18 C02F3/12 C02F11/10 C02F11/06 |
| Y | * paragraphs [0009], [0036] - [0038], [0042], [0044]; claims 1-36; figures 1-3 * | 4 | |
| | ----- | | |
| X | WO 02/36506 A (BIWATER TREAT LTD ; ZUBER PAUL (GB)) 10 May 2002 (2002-05-10) | 1,3 | |
| Y | * page 6 - page 8; figure 1 * | 2,4 | |
| | ----- | | |
| X | US 2002/043498 A1 (HOJSGAARD SOREN J) 18 April 2002 (2002-04-18) | 1,3 | |
| Y | * paragraphs [0022] - [0026], [0031], [0032], [0037]; claims 1-32; figure 1 * | 2,4 | |
| | ----- | | |
| X | WO 02/064516 A (BISGAARD JENS CHRISTIAN ; HOJSGAARD SOREN J (DK); BOISSONNADE GENEVIEN) 22 August 2002 (2002-08-22) | 1,3 | |
| Y | * claims 1-17; figure 1 * | 2,4 | |
| | ----- | | |
| X | US 6 521 133 B1 (ROEDIGER MARKUS) 18 February 2003 (2003-02-18) | 1,3 | TECHNICAL FIELDS SEARCHED (Int.Cl.7) |
| Y | * column 4, lines 9-58; claims 1-20; figure 1 * | 2,4 | C02F |
| | ----- | | |

The present search report has been drawn up for all claims

| Place of search | Date of completion of the search | Examiner |
|---|---|---|
| Munich | 22 December 2004 | Kurtulan, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..............................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 04 46 6023

This annex lists the patent family members relating to the patent documents cited in  the above-mentioned European search report.
The members are as contained in the European Patent Office EDP file on
The European Patent Office is in no way  liable for these particulars which are merely  given for the purpose of information.

22-12-2004

| Patent document cited in search report | | Publication date | Patent family member(s) | | Publication date |
|---|---|---|---|---|---|
| US 2002168288 | A1 | 14-11-2002 | GB | 2376461 A | 18-12-2002 |
| WO 0236506 | A | 10-05-2002 | AU<br>WO | 1248502 A<br>0236506 A1 | 15-05-2002<br>10-05-2002 |
| US 2002043498 | A1 | 18-04-2002 | US | 6325935 B1 | 04-12-2001 |
| WO 02064516 | A | 22-08-2002 | FR<br>EP<br>WO<br>JP<br>NO<br>US | 2820735 A1<br>1360151 A1<br>02064516 A1<br>2004525756 T<br>20033569 A<br>2004060863 A1 | 16-08-2002<br>12-11-2003<br>22-08-2002<br>26-08-2004<br>12-08-2003<br>01-04-2004 |
| US 6521133 | B1 | 18-02-2003 | NONE | | |

EPO FORM P0459

For more details about this annex : see Official Journal of the European Patent Office, No. 12/82